# EUROPÄISCHE PATENTSCHRIFT

(11) **EP 1 035 454 B1**
(45) Veröffentlichungstag und Bekanntmachung des Hinweises auf die Patenterteilung: **28.01.2004**
(21) Anmeldenummer: 00104030.2
(22) Anmeldetag: 26.02.2000
(51) Int. Cl.: G05B 23/02

(54) **Verfahren zur Beurteilung der Zuverlässigkeit technischer Systeme**
Method for determining the reliability of technical systems
Procédé pour déterminer la fiabilité de systèmes techniques

(30) Priorität: 08.03.1999 DE 19910098
(43) Veröffentlichungstag der Anmeldung: 13.09.2000
(73) Patentinhaber: ABB RESEARCH LTD., 8050 Zürich (CH)
(72) Erfinder: Draber, Silke, Dr., D-53177 Bonn-Bad Godesberg (DE)
(74) Vertreter: Akers, Noel James

(56) Entgegenhaltungen:
- DE-A- 19 713 917
- US-A- 5 548 539
- T.ONISAWA: "A MODEL OF SUBJECTIVE RELIABILITY ANALYSIS" SECOND IEEE INTERNATIONAL CONFERENCE ON FUZZY SYSTEMS, Bd. 2, 28. März 1993 (1993-03-28), Seiten 756-761, XP000910587 USA

## Beschreibung

### TECHNISCHES GEBIET

Die vorliegende Erfindung bezieht sich auf das Gebiet der Zuverlässigkeitsanalyse technischer Anlagen. Sie geht aus von einem Verfahren zur quantitativen Schätzung der Zuverlässigkeit eines technischen Systems nach dem Oberbegriff des Anspruchs 1.

### STAND DER TECHNIK

Ein solches Verfahren ist aus dem Artikel von T. L. Regulinski und Y. P. Gupta, "Reliability Cost Estimation: Managerial Perspectives", IEEE Transactions on Reliability, Band R-32, S. 276-281 (1983) bekannt. Dort wird ein Verfahren zur Schätzung fehlerbedingter Kosten im Lebenszyklus eines Systems dargelegt. Für die Systemkomponenten werden je nach Fehlermechanismus verschiedene Ausfallwahrscheinlichkeitsverteilungen postuliert und deren Parameter statistisch oder durch subjektive Expertenmeinung geschätzt. Eine verbesserte Expertenschätzung wird dadurch erzielt, dass für die Ausfallrate ein oberer, mittlerer und unterer Schätzwert angegeben und zur Bestimmung einer Betaverteilung der Ausfallrate verwendet werden. Aus den solcherart modellierten Betaverteilungen wird für das Gesamtsystem eine eindeutige Kostenschätzung berechnet. Problematisch ist jedoch, dass subjektive Schätzungen durch einen oder wenige Experten zu Korrelationen zwischen verschiedenen Ausfallraten führen und die Vorhersage für die Systemzuverlässigkeit auf unbekannte Weise systematisch verfälschen können.

Darüberhinaus ist es bekannt, dass für Fehlerarten mit konstanter Fehlerrate die Fehlerhäufigkeit, d. h. die Zufälligkeit der Anzahl Fehler in einem Zeitintervall, durch eine Poissonverteilung beschrieben werden kann (s. z. B. das Lehrbuch von A. Birolini, "Qualität und Zuverlässigkeit technischer Systeme", Springer-Verlag Berlin (1991), S. 366).

Ferner sind Zuverlässigkeitsanalysen in tabellarischer Form unter den Begriffen FMEA-Analyse ("Failure/Fault Modes and Effects Analysis") oder FMECA ("Failure/Fault Modes, Effects and Criticality Analysis") Stand der Technik. Die Systemkomponenten werden mit ihren möglichen Ausfallarten und den berechneten oder geschätzten Ausfallraten zeilenweise aufgelistet und die Störanfälligkeit des Gesamtsystems beurteilt.

### DARSTELLUNG DER ERFINDUNG

Aufgabe der vorliegenden Erfindung ist es, ein verbessertes Verfahren zur Abschätzung der Zuverlässigkeit eines technischen Systeme anzugeben. Diese Aufgabe wird erfindungsgemäss durch die Merkmale des Anspruchs 1 gelöst.

Die Erfindung besteht darin, dass für die Komponenten eines technischen Systems erste Fehlerarten mit statistisch bekannten Fehlerraten und zweite Fehlerarten mit weitgehend unbekannten Fehlerraten unterschieden werden, wobei für letztere jeweils ein oberer und ein unterer subjektiver Schätzwert angegeben wird und mit allen oberen Schätzwerten eine erste Grenzwahrscheinlichkeitsverteilung und mit allen unteren Schätzwerten eine zweite Grenzwahrscheinlichkeitsverteilung für die Systemzuverlässigkeit berechnet werden. Es wird also eine ungefähre Kenntnis sowohl der Fehlerraten als auch der Unsicherheit von Fehlerratenschätzungen zur Angabe einer konservativen oberen und unteren Grenze der Systemzuverlässigkeit genutzt.

Mit dem erfindungsgemässen Verfahren wird der Einfluss systematischer Fehler auf die Berechnung der Systemzuverlässigkeit weitgehend zurückgedrängt, indem die Expertenschätzungen als untereinander korreliert behandelt werden.

In einem ersten Ausführungsbeispiel werden für die zweiten Fehlerraten zusätzlich jeweils ein mittlerer Wert geschätzt und zur Berechnung einer mittleren Wahrscheinlichkeitsverteilung herangezogen. Durch Addition der einzelnen Ausfallwahrscheinlichkeiten bzw. durch Faltung ihrer Verteilungen kann eine grafische Darstellung der mittleren, maximalen und minimalen Systemzuverlässigkeit für einen Prognosezeitraum angegeben werden. Die grafische Darstellung ermöglicht eine einfache, intuitive Risikobeurteilung für die Wahrscheinlichkeit eines Systemausfalls oder einer Kostenüberschreitung wegen Wartung, Stillstand und Reparatur eines technischen Systems.

In einem weiteren Ausführungsbeispiel werden für jede erste Fehlerart eine Poissonverteilung angenommen, für ein gefordertes Konfidenzniveau eine nach oben und unten verschobene Grenz-Poissonverteilung bestimmt und durch gewichtete Summierung der drei Poissonverteilungen eine verbreiterte Poissonverteilung der ersten Fehlerart bestimmt.

Weitere Ausführungen, Vorteile und Anwendungen der Erfindung ergeben sich aus den abhängigen Ansprüchen sowie aus der nun folgenden Beschreibung anhand der Figuren.

### KURZE BESCHREIBUNG DER ZEICHNUNG

Es zeigen beispielhaft:
- Fig. 1: eine erfindungsgemässe Darstellung für die prognostizierte Wahrscheinlichkeit W einer Stillstandszeit kleiner oder gleich T_{down} (in Stunden) während eines Jahres; und
- Fig. 2: eine schematische Darstellung der erfindungsgemässen Berechnung der Systemzuverlässigkeit im Zusammenhang mit einer FMEA-Tabelle.

In den Figuren sind gleiche Teile mit gleichen Bezugszeichen versehen.

### WEGE ZUR AUSFÜHRUNG DER ERFINDUNG

Die Erfindung hat ein Verfahren zur quantitativen Schätzung der Zuverlässigkeit eines technischen Systems zum Gegenstand. Unter System ist generell eine beliebige Maschine oder Anlage, z. B. eine Turbine oder ein Kraftwerk, oder ein Herstellungs- oder Bearbeitungsprozess zu verstehen. Dabei werden für die Systemkomponenten Fehlerarten mit zugehörigen Fehlerraten angegeben und für das Gesamtsystem und ein vorgebbares Zeitintervall eine Wahrscheinlichkeitsverteilung einer die Zuverlässigkeit charakterisierenden Zufallsgrösse bestimmt. Erste Fehlerraten werden durch statistische Stichproben bestimmt. Zweite Fehlerraten werden durch subjektive Expertenmeinung geschätzt, wobei jeweils ein oberer und ein unterer Schätzwert angegeben werden. Erfindungsgemäss werden mit den oberen Schätzwerten eine erste Grenzwahrscheinlichkeitsverteilung und mit den unteren Schätzwerten eine zweite Grenzwahrscheinlichkeitsverteilung berechnet. Im folgenden werden bevorzugte Ausführungsbeispiele angegeben.

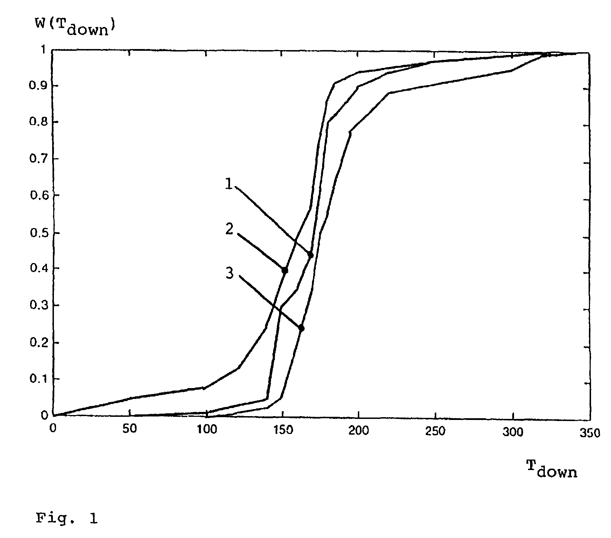

Für die zweiten Fehlerraten können zusätzlich jeweils ein mittlerer Wert geschätzt und mit den mittleren Werten eine mittlere Wahrscheinlichkeitsverteilung berechnet werden. Bevorzugt werden als mittlere Werte die mutmasslich wahrscheinlichsten Werte geschätzt. Das Ergebnis kann in Form einer grafischen Darstellung gemäss Fig. 1 zusammengefasst und veranschaulicht werden. Dort sind als Zufallsgrösse eine ausfallbedingte Stillstandszeit T_{down} während eines Jahres in Stunden gewählt und drei Wahrscheinlichkeitsverteilungen W(T_{down}) 1, 2, 3 dafür angegeben, dass die ausfallbedingte Stillstandszeit kleiner oder gleich T_{down} ist. Dabei bezeichnen 2 eine erste oder optimistische und 3 eine zweite oder pessimistische Grenzwahrscheinlichkeitsverteilung und 1 eine mittlere Wahrscheinlichkeitsverteilung.

Für die ersten Fehlerraten sollen Stichproben-Mittelwerte bestimmt und Verteilungsfunktionen angenommen werden und aus der Ungewissheit jedes Stichproben-Mittelwerts eine Breite oder eine Verbreiterung der zugehörigen Verteilungsfunktion bestimmt werden. Insbesondere werden für jede erste Fehlerart eine Poissonverteilung mit einem nominellen Erwartungswert gleich dem Stichproben-Mittelwert angenommen, aus einem geforderten Konfidenzniveau ein minimaler und ein maximaler Erwartungswert berechnet, und durch gewichtete Summierung der Poissonverteilungen mit dem nominellen, minimalen und maximalen Erwartungswert eine verbreiterte Poissonverteilung berechnet. Erfindungsgemäss werden ein Konfidenzniveau 1-α und Gewichtungsfaktoren 1-2α, α und α für die Poissonverteilungen mit dem nominellen, minimalen und maximalen Erwartungswert gewählt. Typischerweise wird α im Bereich zwischen 0,05 und 0,3 und insbesondere α=0,1 gewählt.

Das erfindungsgemässe Modell einer verbreiterten Wahrscheinlichkeitsverteilung dient dazu, die Ungewissheit in der Kenntnis des Erwartungswerts der zugrundeliegenden Wahrscheinlichkeitsverteilung durch eine Verbreiterung der Wahrscheinlichkeitsverteilung angemessen zu berücksichtigen. Im folgenden wird ein Berechnungsbeispiel für eine Poissonverteilung angegeben. Es sei aus Betriebserfahrung o. ä. bekannt, dass eine Systemkomponente insgesamt nₛₜₐₜ Ausfälle während einer Beobachtungszeit tₛₜₐₜ hat. Dann ist ein nomineller Erwartungswert der zugrundegelegten Pcissonverteilung durch µₙₒₘ=nₛₜₐₜ/tₛₜₐₜ*T gegeben, wobei T=Zeitintervall für die Riskoanalyse bzw. Betriebsdauer des Gesamtsystems. Man berechnet anhand eines Konfidenzniveaus, z. B. 1-α=0,9, eine untere und obere Grenze eines Konfidenzintervalls für den Erwartungswert mit folgenden Gleichungen (gemäss Koslow und Uschakow, Handbuch zur Berechnung der Zuverlässigkeit für Ingenieure, S. 426 (1979)): µ_{low}=n_{low}/tₛₜₐₜ*T, µᵤₚ=nᵤₚ/tₛₜₐₜ*T mit n_{low}=0,5*χ²_{[α/2]} (2nₛₜₐₜ) und nᵤₚ=0,5*χ²_{[1-α/2]} (2nₛₜₐₜ+2), wobei χ²_{[...]}(...) die (tabellierten) χ²-Quantile bezeichnen. Die Faktoren 2 und 0,5 sind in Abweichung von einer gewöhnlichen χ²-Verteilung durch die Poissonverteilung bedingt. Die Poissonverteilungen mit den Erwartungswerten µ_{low}, µₙₒₘ und µᵤₚ werden mit den Gewichtsfaktoren 0,1; 0,8 und 0,1 addiert, so dass eine Verbreiterung resultiert. Erfindungsgemäss sind die Gewichtsfaktoren für die beiden randseitigen Poissonverteilungen so gewählt, dass die Summe der aus dem Konfidenzintervall nach oben und unten überstehenden Anteile (jeweils ca. die Hälfte der randseitigen Verteilungen) gerade gleich dem Konfidenzniveau selber sind. Dadurch ist die Berechnung der Poisson-Verbreiterung weitgehend selbstkonsistent.

Für ein höheres Konfidenzniveau verbreitert sich das Konfidenzintervall, die Gewichtsfaktoren für die Randverteilungen nehmen ab und die Verbreiterung fällt geringer aus. Falls das Zeitintervall T für die Risikoanalyse deutlich länger als die Beobachtungszeit tₛₜₐₜ ist, werden in der verbreiterten Poissonverteilung drei separate Maxima auftreten. Es ist jedoch wünschenswert, eine monomodale verbreiterte Poissonverteilung zu erhalten. Hierfür können die randseitigen Gewichtsfaktoren grösser oder kleiner gewählt und/oder die Anzahl der zu gewichtenden Poissonverteilungen vergrössert werden.

Zur Verbesserung der Prognose der Systemzuverlässigkeit oder der Systemrisikoanalyse werden ferner dritte Fehlerarten berücksichtigt, deren Fehlerraten a priori oder mit grosser statistischer Sicherheit bekannt sind und für die eine ideale Poissonverteilung angenommen wird. Die Verteilungsfunktionen der ersten und dritten Fehlerraten werden gefaltet und durch Addition der oberen, unteren und gegebenenfalls mittleren Schätzwerte der zweiten Fehlerraten die erste und zweite Grenzwahrscheinlichkeitsverteilung 2, 3 und gegebenenfalls eine mittlere Wahrscheinlichkeitsverteilung 1 berechnet. Zusätzlich können andere für die Systemzuverlässigkeit relevante, nicht zufällige Grössen für das Zeitintervall bestimmt und zu den Wahrscheinlichkeitsverteilungen addiert werden.

Bei der Zufallsgrösse, welche die Systemzuverlässigkeit charakterisiert, kann es sich um eine Fehleranfälligkeit, eine Stillstandszeit, Kosten für Stillstand, Reparatur und Wartung oder daraus abgeleitete Grössen handeln. Typischerweise sind die Fehlerraten Ausfallraten der Systemkomponenten.

Schliesslich wird eine Anwendung des offenbarten Verfahrens im Zusammenhang mit FMEA("Failure/Fault Modes and Effects Analysis")-Tabellen, FMECA("Failure/Fault Modes, Effects and Criticality Analysis")-Tabellen oder daraus abgeleiteten Tabellen erläutert. Erfindungsgemäss werden in den Tabellen erste, zweite und dritte Fehlerraten unterschieden, für erste Fehlerraten Stichproben-Mittelwerte und Konfidenzintervalle angegeben, für zweite Fehlerraten obere, untere und gegebenenfalls mittlere Schätzwerte angegeben und für dritte Fehlerraten Erwartungswerte angegeben. Insbesondere werden Poissonverteilungen der ersten und dritten Fehlerarten berechnet und miteinander gefaltet und werden die zweiten Fehlerraten in obere, untere und gegebenenfalls mittlere Fehlerraten gruppiert und jeweils separat addiert.

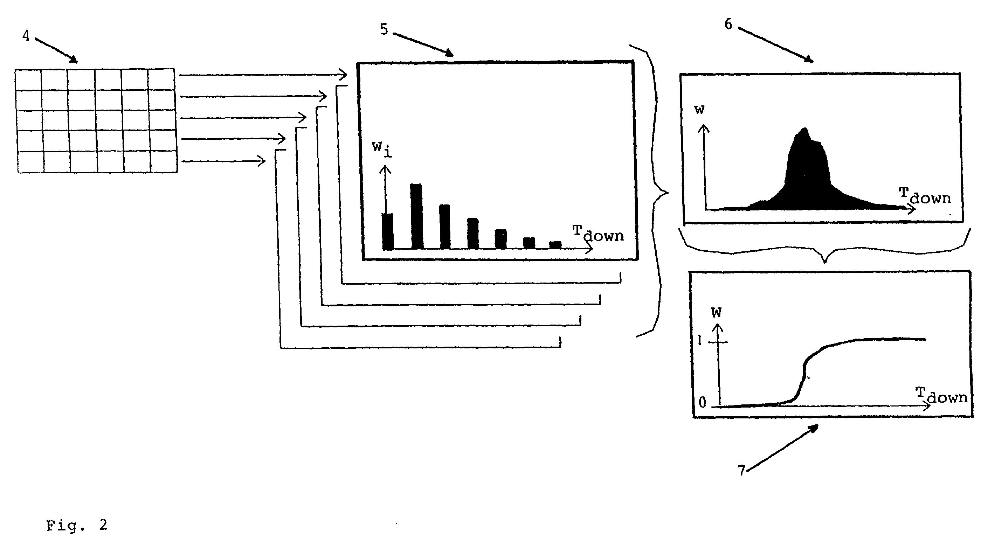

Das Verfahren ist für erste Fehlerarten in Fig. 2 veranschaulicht. Für jede Zeile der FMEA- oder FMECA-Tabelle 4 mit einer ersten Fehlerart werden verbreiterte Poissonverteilungen wᵢ berechnet 5, diese zu einer Gesamt-Wahrscheinlichkeitsdichteverteilung w gefaltet 6 und durch Integration eine Gesamt-Wahrscheinlichkeitsverteilung W bestimmt 7. Es kann auch die Wahrscheinlichkeitsverteilung 1-W angegeben werden, dass die Zufallsgrösse, z. B. die ausfallbedingte Stillstandszeit im vorgebbaren Zeitintervall, grösser als T_{down} ist. Für jede Gruppe der zweiten Fehlerarten wird dieses Berechnungsverfahren wiederholt, um eine obere, untere und gegebenenfalls mittlere Gesamt-Wahrscheinlichkeitsverteilung W oder 1-W für das Systemausfallrisiko zu erhalten.

### BEZUGSZEICHENLISTE

- T_{down}: ausfallbedingte Stillstandszeit
- W(T_{down}): Wahrscheinlichkeitsverteilung für eine ausfallbedingte Stillstandszeit ≤ T_{down}
- 1: mittlere Wahrscheinlichkeitsverteilung
- 2: optimistische Wahrscheinlichkeitsverteilung
- 3: pessimistische Wahrscheinlichkeitsverteilung
- 4: FMEA-Tabelle, FMECA-Tabelle
- 5: zeilenweise berechnete Wahrscheinlichkeitsdichteverteilungen wᵢ; verbreiterte Poissonverteilungen
- 6: Gesamt-Wahrscheinlichkeitsdichteverteilung w; Faltung von (verbeiterten) Poissonverteilungen
- 7: Gesamt-Wahrscheinlichkeitsverteilung W.

## Patentansprüche

1. Verfahren zur quantitativen Schätzung der Zuverlässigkeit eines technischen Systems, wobei für die Systemkomponenten Fehlerarten mit zugehörigen Fehlerraten angegeben werden und für das Gesamtsystem und für ein vorgebbares Zeitintervall eine Wahrscheinlichkeitsverteilung einer die Zuverlässigkeit charakterisierenden Zufallsgrösse bestimmt wird, wobei erste Fehlerraten durch statistische Stichproben bestimmt werden, wobei ferner zweite Fehlerraten durch subjektive Expertenmeinung geschätzt werden und jeweils ein oberer und ein unterer Schätzwert angegeben werden, **dadurch gekennzeichnet, dass** mit den oberen Schätzwerten eine erste Grenzwahrscheinlichkeitsverteilung (2) und mit den unteren Schätzwerten eine zweite Grenzwahrscheinlichkeitsverteilung (3) berechnet werden.

2. Verfahren nach Anspruch 1, **dadurch gekennzeichnet, dass**
a) für die zweiten Fehlerraten zusätzlich jeweils ein mittlerer, insbesondere ein wahrscheinlichster Wert geschätzt wird und
b) mit den mittleren Werten eine mittlere Wahrscheinlichkeitsverteilung (1) berechnet wird.

3. Verfahren nach einem der Ansprüche 1-2, **dadurch gekennzeichnet, dass**
a) für erste Fehlerraten Stichproben-Mittelwerte bestimmt und Verteilungsfunktionen angenommen werden und
b) aus der Ungewissheit jedes Stichproben-Mittelwerts eine Breite oder eine Verbreiterung der zugehörigen Verteilungsfunktion bestimmt wird.

4. Verfahren nach Anspruch 3, **dadurch gekennzeichnet, dass**
a) für jede erste Fehlerart eine Poissonverteilung mit einem nominellen Erwartungswert gleich dem Stichproben-Mittelwert angenommen wird,
b) aus einem geforderten Konfidenzniveau ein minimaler und ein maximaler Erwartungswert berechnet werden, und
c) durch gewichtete Summierung der Poissonverteilungen mit dem nominellen, minimalen und maximalen Erwartungswert eine verbreiterte Poissonverteilung berechnet wird.

5. Verfahren nach Anspruch 4, **dadurch gekennzeichnet, dass**
a) ein Konfidenzniveau 1-α und Gewichtungsfaktoren 1-2α, α und α für die Poissonverteilungen mit dem nominellen, minimalen und maximalen Erwartungswert gewählt werden und
b) insbesondere α=0,1 gesetzt wird.

6. Verfahren nach einem der Ansprüche 1-5, **dadurch gekennzeichnet, dass** dritte Fehlerarten berücksichtigt werden, deren Fehlerraten a priori oder mit grosser statistischer Sicherheit bekannt sind und für die eine Poissonverteilung angenommen wird.

7. Verfahren nach einem der Ansprüche 1-6, **dadurch gekennzeichnet, dass**
a) Verteilungsfunktionen der ersten und von dritten Fehlerraten gefaltet werden und durch Addition der oberen, unteren und gegebenenfalls mittleren Schätzwerte der zweiten Fehlerraten die erste und zweite Grenzwahrscheinlichkeitsverteilung (2, 3) und gegebenenfalls eine mittlere Wahrscheinlichkeitsverteilung (1) berechnet werden und
b) insbesondere andere für die Systemzuverlässigkeit relevante, nicht zufällige Grössen für das Zeitintervall bestimmt und zu den Wahrscheinlichkeitsverteilungen addiert werden.

8. Verfahren nach einem der Ansprüche 1-7, **dadurch gekennzeichnet, dass**
a) die die Zuverlässigkeit charakterisierende Zufallsgrösse eine Fehleranfälligkeit, eine Stillstandszeit, Kosten für Stillstand, Reparatur und Wartung oder daraus abgeleitete Grössen sind und
b) insbesondere die Fehlerraten Ausfallraten sind.

9. Anwendung des Verfahrens gemäss eines der Ansprüche 1-8 im Zusammenhang mit FMEA-Tabellen, FMECA-Tabellen oder daraus abgeleiteten Tabellen (4), **dadurch gekennzeichnet, dass**
a) in den Tabellen (4) erste, zweite und dritte Fehlerraten unterschieden werden,
b) für erste Fehlerraten Stichproben-Mittelwerte und Konfidenzintervalle angegeben werden,
c) für zweite Fehlerraten obere, untere und gegebenenfalls mittlere Schätzwerte angegeben werden und
d) für dritte Fehlerraten Erwartungswerte angegeben werden.

10. Anwendung des Verfahrens nach Anspruch 9, **dadurch gekennzeichnet, dass**
a) Poissonverteilungen der ersten und dritten Fehlerarten berechnet und miteinander gefaltet werden und
b) die zweiten Fehlerraten in obere, untere und gegebenenfalls mittlere Fehlerraten gruppiert und jeweils separat addiert werden.

## Claims

1. A method for the quantitative estimation of the reliability of a technical system, fault modes with associated fault rates being stated for the system components and a probability distribution of a random variable which characterises reliability being determined for the overall system for a predeterminable time interval, first fault rates being determined by statistical random samples, second fault rates furthermore being estimated by subjective expert opinion and an upper and lower estimated value being stated in each case, **characterised in that** a first limit probability distribution (2) is calculated with the upper estimated values and a second limit probability distribution (3) is calculated with the lower estimated values.

2. A method according to claim 1, **characterised in that**
a) an average, in particular most probable, value is in each case additionally estimated for the second fault rates and
b) an average probability distribution (1) is calculated with the average values.

3. A method according to one of claims 1-2, **characterised in that**
a) random sample averages are determined and distribution functions assumed for first fault rates and
b) a width or extension of the associated distribution function is determined from the uncertainty of each random sample average.

4. A method according to claim 3, **characterised in that**
a) a Poisson distribution with a nominal expected value equal to the random sample average is assumed for each first fault mode,
b) a minimum and a maximum expected value are calculated from a required confidence level, and
c) an extended Poisson distribution is calculated by weighted summation of the Poisson distributions with the nominal, minimum and maximum expected value.

5. A method according to claim 4, **characterised in that**
a) a confidence level 1-α and weighting factors 1-2α, α and α are selected for the Poisson distributions with the nominal, minimum and maximum expected value and
b) in particular α is set to 0.1.

6. A method according to one of claims 1-5, **characterised in that** third fault modes are taken into account, the fault rates are known a priori or with great statistical certainty and for which a Poisson distribution is assumed.

7. A method according to one of claims 1-6, **characterised in that**
a) distribution functions of the first and of the third fault rates are folded and the first and second limit probability distribution (2, 3) and optionally an average probability distribution (1) are calculated by addition of the upper, lower and optionally average estimated values of the second fault rates and
b) in particular other non-random variables of relevance to system reliability are determined for the time interval and added to the probability distributions.

8. A method according to one of claims 1-7, **characterised in that**
a) the random variable which characterises reliability comprises fault susceptibility, downtime, costs for downtime, repair and maintenance or variables derived therefrom and
b) in particular, the fault rates are failure rates.

9. Use of the method according to one of claims 1-8 in connection with FMEA tables, FMECA tables or tables (4) derived therefrom, **characterised in that**
a) first, second and third fault rates are differentiated in the tables (4),
b) random sample averages and confidence ranges are stated for first fault rates,
c) upper, lower and optionally average estimated values are stated for second fault rates and
d) expected values are stated for third fault rates.

10. Use of the method according to claim 9, **characterised in that**
a) Poisson distributions of the first and third fault modes are calculated and folded together and
b) the second fault rates are divided into upper, lower and optionally average fault rate groups and in each case separately added together.

## Revendications

1. Procédé d'évaluation quantitative de la fiabilité d'un système technique, des types d'erreur avec les taux d'erreur correspondants étant indiqués pour les composants du système et une variable aléatoire caractérisant la fiabilité étant déterminée pour l'ensemble du système et pour un intervalle de temps prédéfini d'une distribution probable, des premiers taux d'erreur étant déterminés par échantillonnage statistique, des deuxièmes taux d'erreur étant ensuite estimés par expertise subjective et une valeur estimée supérieure ainsi qu'une valeur estimée inférieure étant à chaque fois indiquées, **caractérisé en ce qu'**une première distribution probable limite (2) est calculée avec les valeurs estimées supérieures et une deuxième distribution probable limite (3) est calculée avec les valeurs estimées inférieures.

2. Procédé selon la revendication 1, **caractérisé en ce que**
a) une valeur moyenne, plus précisément une valeur plus probable est à chaque fois estimée en plus pour les deuxièmes taux d'erreur et
b) une distribution probable moyenne (1) est calculée avec les valeurs moyennes.

3. Procédé selon l'une des revendications 1-2, **caractérisé en ce que**
a) des valeurs moyennes d'échantillon sont déterminées et des fonctions de distribution sont supposées pour les premiers taux d'erreur et
b) une largeur ou un élargissement de la fonction de distribution correspondante est déterminée à partir de l'incertitude de chaque valeur moyenne d'échantillon.

4. Procédé selon la revendication 3, **caractérisé en ce que**
a) une distribution de Poisson ayant une valeur attendue nominale égale à la valeur moyenne d'échantillon est supposée pour chaque premier type d'erreur,
b) une valeur attendue minimale et maximale est calculée à partir d'un niveau de confidence exigé et
c) une distribution de Poisson étendue est calculée à partir du total pondéré des distributions de Poisson avec la valeur attendue nominale, minimale et maximale.

5. Procédé selon la revendication 4, **caractérisé en ce que**
a) un niveau de confidence 1-α et des facteurs de pondération 1-2α, α et α sont sélectionnés pour les distributions de Poisson avec la valeur attendue nominale, minimale et maximale et
b) α est notamment fixé égal à 0,1.

6. Procédé selon l'une des revendications 1-5, **caractérisé en ce qu'**il est tenu compte de troisièmes types d'erreur dont les taux d'erreur sont connus à priori ou avec une grande certitude statistique et sont supposés pour la distribution de Poisson.

7. Procédé selon l'une des revendications 1-6, **caractérisé en ce que**
a) les fonctions de distribution des premiers et troisièmes taux d'erreur sont pliées et la première et la deuxième distribution probable limite (2, 3) et éventuellement une distribution probable moyenne (1) sont calculées en additionnant les valeurs estimées supérieure, inférieure et éventuellement moyenne des deuxième taux d'erreur et
b) d'autres variables non aléatoires et significatives pour la fiabilité du système sont notamment déterminées pendant l'intervalle de temps et additionnées aux distributions probables.

8. Procédé selon l'une des revendications 1-7, **caractérisé en ce que**
a) les variables aléatoires qui caractérisent la fiabilité sont une probabilité d'erreur, un temps d'immobilisation, le coût de l'immobilisation, de la réparation et de l'entretien ou des grandeurs qui en sont dérivées et
b) les taux d'erreur sont notamment des taux de panne.

9. Application du procédé selon l'une des revendications 1-8 en relation avec des tableaux FMEA, des tableaux FMECA ou des tableaux dérivés de ceux-ci (4), **caractérisée en ce que**
a) les premiers, deuxièmes et troisièmes taux d'erreur sont différenciés dans les tableaux (4),
b) des valeurs moyennes d'échantillon et des intervalles de confidence sont indiqués pour les premiers taux d'erreur,
c) des valeurs estimées supérieures, inférieures et éventuellement moyennes sont indiquées pour les deuxièmes taux d'erreur et
d) des valeurs attendues sont indiquées pour les troisièmes taux d'erreur.

10. Application du procédé selon la revendication 9, **caractérisée en ce que**
a) les distributions de Poisson des premiers et troisièmes taux d'erreur sont calculées et pliées entre elles et
b) les deuxièmes taux d'erreur sont groupés en taux d'erreur supérieurs, inférieurs et éventuellement moyens puis à chaque fois additionnés séparément.
